# EUROPEAN PATENT APPLICATION

(11) **EP 4 166 520 A1**
(43) Date of publication of application: **19.04.2023**
(21) Application number: 21820877.5
(22) Date of filing: 08.06.2021
(51) Int. Cl.: C03C 13/00, C03C 13/02

(54) **GLASS COMPOSITION, GLASS FILLER AND PRODUCTION METHOD THEREFOR, AND RESIN COMPOSITION CONTAINING GLASS FILLER**

(30) Priority: 10.06.2020 JP 2020100720
(71) Applicant: NIPPON SHEET GLASS COMPANY, LIMITED, Tokyo 108-6321 (JP)
(72) Inventor: FUJIWARA, Kosuke, Tokyo 108-6321 (JP)
(74) Representative: Cabinet Beau de Loménie
(86) International application number: PCT/JP2021/021815
(87) International publication number: WO 2021/251399

(57) **Abstract**

A provided glass composition includes, in mass%: 50 ≤ SiO₂ ≤ 65; 20 ≤ B₂O₃ ≤ 30; and 5 ≤ Al₂O₃ ≤ 20, and further includes: at least one selected from the group consisting of MgO and CaO; and at least one selected from the group consisting of Li₂O, Na₂O, and K₂O. In the glass composition, 0.1 ≤ (MgO + CaO) < 5, 0 ≤ (Li₂O + Na₂O + K₂O) ≤ 4, and 0.50 < MgO/(MgO + CaO) ≤ 1.00 are satisfied. The glass composition is suitable for manufacturing a glass filler that has a low permittivity and that can exhibit an excellent water resistance.

## Description

### TECHNICAL FIELD

The present invention relates to a glass composition. The present invention also relates to a glass filler, a method for manufacturing a glass filler, and a resin composition including a glass filler.

### BACKGROUND ART

In various parts mounted in an electronic device, resin compositions are widely used as an electrically-insulating member and a mechanism member. Examples of the electrically-insulating member include: a connector housing used for surface mount technology (SMT), flexible printed circuits (FPCs), board-to-board, central processing unit (CPU) sockets, memory cards, card edges, optical connectors, and the like; a reactance bobbin used for liquid crystal display (LCD) backlights, coils, flats, transformers, magnetic heads, and the like; a switch unit used for relay cases, relay base switches, reflow DIP switches, tact switches, and the like; a sensor case; a capacitor casing; a volume casing; and a trimmer casing. Examples of the mechanism member include a lens holder and a pickup base for optical pickup, an insulator and a terminal for micromotors, and a drum for laser printers. Resin compositions are used also as a film such as a base film for FPC and a base film for copper clad laminates. In addition, some printed circuit boards mounted in electronic devices also include a board formed of a resin composition. Some printed wiring boards, which have no electronic components installed, also include a board formed of a resin composition. Hereinafter, in the present description, both printed circuit boards and printed wiring boards are referred to collectively as "printed boards".

The above resin compositions commonly include a thermoplastic resin and an inorganic filler, and further include a curing agent, a modifying agent, or the like as necessary. A glass filler is sometimes used as the inorganic filler. A typical glass filler is a glass flake. In recent years, to meet the demand for reducing the size of electronic devices and the demand for reducing the thickness of the electronic devices to a high performance, resin compositions and constituent materials thereof are required to have a low permittivity.

Some printed boards further include a glass fiber. The glass fiber is also required to have a low permittivity. Glass fibers formed of low-permittivity glass compositions are disclosed in Patent Literatures 1 to 3.

### CITATION LIST

### Patent Literature

Patent Literature 1: JP S62-226839 A
Patent Literature 2: WO 2017/187471 A1
Patent Literature 3: WO 2018/216637 A1

### SUMMARY OF INVENTION

### Technical Problem

Glass fillers used as inorganic fillers are required to have a low permittivity and an excellent water resistance. However, it is difficult to enhance the water resistance of low-permittivity glass compositions. Additionally, water resistance is not considered in Patent Literatures 1 to 3.

In view of the above, the present invention aims to provide a glass composition suitable for manufacturing a glass filler that has a low permittivity and that can exhibit an excellent water resistance.

### Solution to Problem

The present invention provides a glass composition including, in mass%:

50 ≤ SiO₂ ≤ 65;

20 ≤ B₂O₃ ≤ 30;

and

5 ≤ Al₂O₃ ≤ 20,

and further including:
at least one selected from the group consisting of MgO and CaO; and
at least one selected from the group consisting of Li₂O, Na₂O, and K₂O, wherein

0.1 ≤ (MgO + CaO) < 5,

0 ≤ (Li₂O + Na₂O + K₂O) ≤ 4,

and

0.50 < MgO/(MgO + CaO) ≤ 1.00

are satisfied.

In another aspect, the present invention provides a glass filler including the above glass composition of the present invention.

In another aspect, the present invention provides a resin composition including the above glass filler of the present invention and a thermoplastic resin.

In another aspect, the present invention provides a glass filler manufacturing method including:
melting the above glass composition of the present invention; and
shaping the molten glass composition into a glass filler.

### Advantageous Effects of Invention

According to the present invention, it is possible to provide a glass composition suitable for manufacturing a glass filler that has a low permittivity and that can exhibit an excellent water resistance. From the glass composition of the present invention can be manufactured, for example, a glass filler suitable for decreasing a permittivity of a resin composition, the glass filler being suitable for improving various properties of the resin composition by incorporation of the glass filler. The improvement of various properties includes, for example: enhancement in strength, heat resistance, and dimensional stability; decrease in linear thermal expansion coefficient and reduction in its anisotropy; and reduction in anisotropy of the shrinkage factor at molding.

### BRIEF DESCRIPTION OF DRAWINGS

FIG. 1A is a perspective view schematically showing an example of a glass flake being a type of a glass filler of the present invention.
FIG. 1B is a plan view showing the glass flake of FIG. 1A viewed from a top surface thereof.
FIG. 2 is a schematic diagram for illustrating an exemplary apparatus for manufacturing a glass flake and an exemplary method for manufacturing a glass flake.
FIG. 3 is a schematic diagram for illustrating another exemplary apparatus for manufacturing a glass flake and another exemplary method for manufacturing a glass flake.
FIG. 4 is a schematic diagram for illustrating an exemplary spinning apparatus available for manufacturing a chopped strand.
FIG. 5 is a schematic diagram for illustrating an exemplary apparatus for manufacturing a chopped strand from a wound strand body obtained from the spinning apparatus of FIG. 4.
FIG. 6 is a perspective view showing an exemplary flat fiber.
FIG. 7 is a perspective view showing another exemplary flat fiber.

### DESCRIPTION OF EMBODIMENTS

Every symbol "%" used hereinafter to indicate the content of a component is "mass%". The phrase "substantially free" of a component means that the content of the component is less than 0.1 mass%, preferably less than 0.07 mass%, more preferably less than 0.05 mass%, particularly preferably less than 0.01 mass%, and most preferably less than 0.005 mass%. The term "substantially" in this phrase is intended to allow impurities inevitably introduced from an industrial raw material, a glass manufacturing apparatus, a glass shaped body manufacturing apparatus, and the like within the above limits. Preferred ranges of the contents, properties, etc. of components, can be determined by combining the upper and lower limits described below individually.

The term "permittivity" refers to "relative permittivity" (dielectric constant) in a strict sense. Herein, "relative permittivity" is expressed simply as "permittivity", as is conventional. A permittivity is obtained at room temperature (25°C).

The following description is not intended to limit the present invention, and is provided in the sense of indicating preferred embodiments thereof.

[Components of glass composition] (SiO₂)

SiO₂ is a component for forming a glass network structure, and is a main component (a component whose content is highest). SiO₂ acts to adjust the devitrification temperature and the viscosity at forming of the glass and acts to decrease the permittivity of the glass. When the SiO₂ content is 50% or more and 65% or less, it is possible to prevent the devitrification temperature from increasing to such an extent that it is difficult to manufacture a glass filler, and it is possible to adjust the permittivity within a range suitable for incorporation into a resin composition. The SiO₂ content in the above range does not excessively increase the melting point of the glass and increases homogeneity at melting of raw materials. The lower limit of the SiO₂ content may be 51% or more, 52% or more, 53% or more, 54% or more, 55% or more, or even more than 55%. The upper limit of the SiO₂ content may be less than 64%, 63% or less, 62% or less, less than 62%, 61% or less, 60% or less, 59% or less, or even 58% or less.

### (B₂O₃)

B₂O₃ is a component for forming a glass network structure. B₂O₃ acts to adjust the devitrification temperature and the viscosity at forming of the glass and acts to decrease the permittivity of the glass. On the other hand, B₂O₃ is prone to volatilization at melting of the glass. An excessively high B₂O₃ content makes it difficult to achieve a sufficient homogeneity of the glass. Inclusion of an excessive amount of B₂O₃ decreases the water resistance of the glass. When the B₂O₃ content is 20% or more and 30% or less, it is possible to prevent the devitrification temperature of the glass from increasing to such an extent that it is difficult to manufacture a glass filler, and it is possible to adjust the permittivity within a range suitable for incorporation into a resin composition. The B₂O₃ content in the above range does not excessively increase the melting point of the glass and increases homogeneity at melting of the raw materials. Moreover, the B₂O₃ content in the above range increases the water resistance of the glass. The lower limit of the B₂O₃ content may be more than 20%, 21% or more, 22% or more, 23% or more, 24% or more, 25% or more, 26% or more, or even more than 26%. The upper limit of the B₂O₃ content may be less than 30%, 29.5% or less, 29% or less, 28.5% or less, or even 28% or less.

### (SiO₂ - B₂O₃)

For the glass composition having a lower permittivity and a higher water resistance, SiO₂ - B₂O₃, which is a value obtained by subtracting the B₂O₃ content from the SiO₂ content, may be adjusted to 26% or more, 27% or more, 28% or more, 29% or more, or even 30% or more.

### (Al₂O₃)

Al₂O₃ is a component for forming a glass network structure. Al₂O₃ acts to adjust the devitrification temperature and the viscosity at forming of the glass and acts to improve the water resistance of the glass. Al₂O₃ is also a component for adjusting the permittivity of the glass. When the Al₂O₃ content is 5% or more and 20% or less, it is possible to prevent the devitrification temperature of the glass from increasing to such an extent that it is difficult to manufacture a glass filler, and the water resistance of the glass increases. The Al₂O₃ content in the above range does not excessively increase the melting point of the glass and increases homogeneity at melting of the raw materials. The lower limit of the Al₂O₃ content may be 6% or more, 8% or more, 9% or more, or even 10% or more. The upper limit of the Al₂O₃ content may be 18% or less, 16% or less, 15.5% or less, 15.3% or less, 15% or less, 14.5% or less, 14% or less, 13.5% or less, or even 13% or less. To decrease the devitrification temperature or to reliably increase a temperature difference ΔT between a working temperature and the devitrification temperature, a suitable Al₂O₃ content is 13% or less. It should be noted that the greater the temperature difference ΔT is, the better ease of shaping a glass filler has.

### (MgO, CaO)

MgO and CaO maintain the heat resistance of the glass and act to adjust the devitrification temperature and the viscosity at forming of the glass. Additionally, MgO and CaO are components acting to improve the water resistance of the glass and adjusting the permittivity of the glass.

When an emphasis is on controlling the permittivity and the water resistance of a glass filler, MgO + CaO, which is the sum of the contents of MgO and CaO, is important. When MgO + CaO is 0.1% or more and less than 5%, it is possible to prevent the devitrification temperature of the glass from increasing to such an extent that it is difficult to manufacture a glass filler, and it is possible to adjust the permittivity within a range suitable for incorporation into a resin composition. MgO + CaO in the above range does not excessively increase the melting point of the glass and increases homogeneity at melting of the raw materials. Moreover, MgO + CaO in the above range increases the water resistance of the glass. The lower limit of MgO + CaO may be 0.5% or more, 1% or more, 1.5% or more, 2% or more, 2.2% or more, 2.4% or more, 2.5% or more, 2.8% or more, 2.9% or more, 3% or more, 3.2% or more, 3.5% or more, or even more than 3.5%. The upper limit of MgO + CaO may be 4.5% or less, or even 4% or less.

Addition of MgO is advantageous compared to addition of CaO from the viewpoint of reduction in permittivity. Moreover, addition of MgO is advantageous compared to addition of CaO also from the viewpoint of improvement in water resistance. Therefore, MgO/(MgO + CaO), which is a ratio (on a mass basis) of MgO to MgO + CaO, is more than 0.50 and 1.00 or less. When MgO/(MgO + CaO) is more than 0.50, it is possible to prevent the devitrification temperature of the glass from increasing to such an extent that it is difficult to manufacture a glass filler, and it is possible to adjust the permittivity within a range suitable for incorporation into a resin composition. MgO/(MgO + CaO) in the above range does not excessively increase the melting point of the glass and increases homogeneity at melting of the raw materials. Moreover, MgO/(MgO + CaO) in the above range increases the water resistance of the glass. The lower limit of MgO/(MgO + CaO) may be 0.55 or more, 0.60 or more, 0.65 or more, 0.70 or more, 0.75 or more, 0.80 or more, or even 0.85 or more. The upper limit of MgO/(MgO + CaO) may be 0.99 or less, or even 0.95 or less. To maintain a low permittivity and reliably improve the water resistance of the glass, a suitable range of MgO/(MgO + CaO) is 0.85 or more and may be 0.90 or more.

Inclusion of an excessive amount of MgO increases the permittivity of the glass. The MgO content is, for example, 0.1% or more and less than 5%. When MgO is in the above range, it is possible to more reliably prevent the devitrification temperature of the glass from increasing to such an extent that it is difficult to manufacture a glass filler, and it is possible to more reliably adjust the permittivity within a range suitable for incorporation into a resin composition. The MgO content in the above range can prevent an excessive increase in the melting point of the glass and can more reliably improve the homogeneity at melting the raw materials. Moreover, the MgO content in the above range can more reliably improve the water resistance of the glass. The lower limit of the MgO content may be 1% or more, 1.5% or more, 1.8% or more, 2% or more, 2.1% or more, 2.3% or more, 2.5% or more, 2.7% or more, or even 3% or more. The upper limit of the MgO content may be 4.5% or less, 4% or less, or even 3.5% or less.

Inclusion of an excessive amount of CaO increases the permittivity of the glass. The lower limit of the CaO content may be 0.1% or more, or even 0.2% or more. The upper limit of the CaO content may be less than 2.5%, 2% or less, 1.5% or less, 1.2% or less, 1% or less, 0.75% or less, 0.7% or less, or even 0.5% or less. To maintain a low permittivity and reliably improve the water resistance of the glass, a suitable range of CaO is 0.5% or less.

### (SrO)

The glass composition can include SrO. SrO can act to adjust the devitrification temperature and the viscosity at forming of the glass. On the other hand, inclusion of an excessive amount of SrO increases the permittivity of the glass. The upper limit of the SrO content may be 5% or less, 3.5% or less, 2% or less, 1.5% or less, 1% or less, 0.5% or less, less than 0.5%, or even 0.1% or less. The glass composition may be substantially free of SrO.

### (BaO)

The glass composition can include BaO. BaO can act to adjust the devitrification temperature and the viscosity at forming of the glass. On the other hand, inclusion of an excessive amount of BaO increases the permittivity of the glass. The upper limit of the BaO content may be 5% or less, 2% or less, 1% or less, less than 1%, 0.5% or less, or even 0.1% or less. The glass composition may be substantially free of BaO. When homogeneous melting of the glass raw materials and stable manufacturing of the glass composition are particularly important, the lower limit of the BaO content may be 0.1% or more.

### (ZnO)

The glass composition can include ZnO. ZnO can act to adjust the devitrification temperature and the viscosity at forming of the glass. Additionally, ZnO can act to adjust the permittivity of the glass. On the other hand, inclusion of an excessive amount of ZnO increases the permittivity of the glass. The lower limit of the ZnO content may be 0.1 % or more. The upper limit of the ZnO content may be 5% or less, 4% or less, 3.5% or less, 3% or less, 2% or less, 1.5% or less, 1% or less, less than 1%, 0.5% or less, or even 0.1% or less. The glass composition may be substantially free of ZnO.

### (MgO + CaO + ZnO)

When ZnO is included, MgO + CaO + ZnO, which is the sum of the contents of MgO, CaO, and ZnO, may be controlled from the viewpoint of putting an emphasis on the permittivity of a glass filler. MgO + CaO + ZnO may be 0.1% or more and 6% or less. When MgO + CaO + ZnO is in the above range, it is possible to more reliably prevent the devitrification temperature of the glass from increasing to such an extent that it is difficult to manufacture a glass filler, and it is possible to more reliably adjust the permittivity within a range suitable for incorporation into a resin composition. MgO + CaO + ZnO in the above range can prevent an excessive increase in the melting point of the glass and can more reliably improve the homogeneity at melting the raw materials. The lower limit of MgO + CaO + ZnO may be 1% or more, 1.5% or more, 2% or more, 2.5% or more, 2.8% or more, 2.9% or more, 3% or more, 3.2% or more, 3.3% or more, or even 3.5% or more. The upper limit of MgO + CaO + ZnO may be 6% or less, 5.5% or less, less than 5%, 4.5% or less, or even 4% or less.

### (Li₂O, Na₂O, K₂O)

Li₂O, Na₂O, and K₂O, which are alkali metal oxides, maintain the heat resistance of the glass and act to adjust the devitrification temperature and the viscosity at forming of the glass. On the other hand, inclusion of an excessive amount of the alkali metal oxides increases the permittivity of the glass and decreases the water resistance thereof. Therefore, Li₂O + Na₂O + K₂O, which is the sum of the contents of the alkali metal oxides, is 0% or more and 4% or less. The lower limit of Li₂O + Na₂O + K₂O may be 0.1% or more, 0.2% or more, 0.3% or more, 0.4% or more, 0.5% or more, more than 0.5%, 0.6% or more, 0.7% or more, or even more than 0.7%. The upper limit of Li₂O + Na₂O + K₂O may be 4% or less, 3% or less, 2% or less, 1.5% or less, 1% or less, or even 0.9% or less.

Inclusion of an excessive amount of Li₂O increases the permittivity of the glass and decreases the water resistance thereof. The lower limit of the Li₂O content may be 0.1% or more, 0.2% or more, 0.3% or more, 0.4% or more, or even 0.5% or more. The upper limit of the Li₂O content may be 4% or less, 3% or less, 2% or less, 1.5% or less, 1% or less, or even 0.9% or less.

Inclusion of an excessive amount of Na₂O increases the permittivity of the glass and decreases the water resistance thereof. Additionally, Na₂O increases the permittivity by a larger amount than Li₂O. The upper limit of the Na₂O content may be 4% or less, 2% or less, 1.5% or less, 1% or less, 0.5% or less, 0.3% or less, or even 0.2% or less.

Inclusion of an excessive amount of K₂O increases the permittivity of the glass and decreases the water resistance thereof. Additionally, K₂O increases the permittivity by a larger amount than Li₂O. The upper limit of the K₂O content may be 4% or less, 2% or less, 1 % or less, 0.5% or less, 0.2% or less, or even less than 0.1%. The glass composition may be substantially free of K₂O.

### (TiO₂)

The glass composition can include TiO₂. TiO₂ improves the meltability of the glass and the chemical resistance thereof and can act to improve the UV-absorption property of the glass. On the other hand, inclusion of an excessive amount of TiO₂ increases the permittivity of the glass. The lower limit of the TiO₂ content may be 0.1% or more. The upper limit of the TiO₂ content may be 5% or less, 2% or less, less than 1%, 0.9% or less, 0.8% or less, 0.7% or less, less than 0.5%, 0.4% or less, 0.3% or less, 0.2% or less, or even 0.1% or less. The TiO₂ content in the above range can reduce an increase in the devitrification temperature of the molten glass attributable to inclusion of TiO₂, the increase affecting manufacturing of a glass filler. The glass composition may be substantially free of TiO₂.

### (ZrO₂)

The glass composition can include ZrO₂. ZrO₂ can act to adjust the devitrification temperature and the viscosity at forming of the glass. On the other hand, inclusion of an excessive amount of ZrO₂ increases the permittivity of the glass. The upper limit of the ZrO₂ content may be 5% or less, 2% or less, less than 1%, less than 0.5%, 0.2% or less, or even 0.1% or less. The ZrO₂ content in the above range can reduce an increase in the devitrification temperature of the molten glass attributable to inclusion of ZrO₂, the increase affecting manufacturing of a glass filler. The lower limit of the ZrO₂ content may be 0.1% or more, or even 0.15% or more. The glass composition may be substantially free of ZrO₂.

### (Fe)

The glass composition can include Fe. Fe in the glass is commonly present as Fe²⁺ and/or Fe³⁺. Fe³⁺ can act to increase the UV-absorption property of the glass. Fe²⁺ can act to increase the heat absorption property of the glass. Fe can be introduced in some cases not intentionally but inevitably from an industrial raw material. Inclusion of a small amount of Fe can prevent coloring of the glass. The upper limit of the Fe content may be 5% or less, 2% or less, less than 1.8%, 1.5% or less, less than 1%, less than 0.5%, or even 0.2% or less in terms as T-Fe₂O₃ (T-Fe₂O₃ represents total iron oxide calculated as Fe₂O₃). The lower limit of the Fe content may be 0.1% or more in terms of T-Fe₂O₃. The glass composition may be substantially free of Fe in terms of T-Fe₂O₃.

### (P₂O₅)

The glass composition can include P₂O₅. P₂O₅ is a component for forming a glass network structure, and can act to adjust the devitrification temperature and the viscosity at forming of the glass. Additionally, P₂O₅ can act to adjust the permittivity of the glass. However, it is commonly said that when the P₂O₅ content is more than 2%, a furnace wall of a melting furnace or a regenerative furnace is eroded during melting of glass and the life span of the furnace is drastically decreased. The upper limit of the P₂O₅ content may be 5% or less, 2% or less, less than 1%, less than 0.5%, 0.3% or less, 0.2% or less, or even less than 0.1%. The glass composition may be substantially free of P₂O₅.

### (F₂, Cl₂)

The glass composition can include F₂ and/or Cl₂. F₂ and Cl₂ included in the glass composition can improve the homogeneity of the glass at melting of the raw materials without excessively increasing the melting point of the glass. However, since F₂ and Cl₂ easily volatilize, F₂ and Cl₂ can scatter during melting thereof and it is difficult to control the amounts thereof in the glass. The upper limit of the F₂ content may be 5% or less, 2% or less, 1% or less, 0.5% or less, 0.2% or less, or even 0.1% or less. The glass composition may be substantially free of F₂. The upper limit of the Cl₂ content may be 5% or less, 2% or less, 1% or less, 0.5% or less, 0.2% or less, or even 0.1% or less. The glass composition may be substantially free of Cl₂.

### (Additional components)

The glass composition can include, as an additional component(s), at least one selected from the group consisting of La₂O₃, WO₃, Nb₂O₅, Y₂O₃, MoO₃, Ta₂O₅, MnO₂, and Cr₂O₃, and the content of each component can be 0% or more and 5% or less. The acceptable upper limit of the content of each component may be less than 2%, less than 1%, less than 0.5%, or even 0.1% or less. The acceptable upper limit of the total content of the components may be 5% or less, less than 2%, less than 1%, less than 0.5%, or even 0.1 % or less. The glass composition may be substantially free of any one component selected from the above group. Moreover, the glass composition may be substantially free of two or more components selected from the above group in any combination.

The glass composition can include, as an additive(s), at least one selected from the group consisting of Br₂, I₂, SnO₂, CeO₂, As₂O₃, and Sb₂O₃, and the content of each component can be 0% or more and 1% or less. The acceptable upper limit of the content of each component may be less than 0.5%, less than 0.2%, or even less than 0.1%. The acceptable upper limit of the total content of the components may be 1% or less, less than 0.5%, less than 0.2%, or even less than 0.1%. The glass composition may be substantially free of any one component selected from the above group. Moreover, the glass composition may be substantially free of two or more components selected from the above group in any combination.

The glass composition can include at least one selected from the group consisting of H₂O, OH, H₂, CO₂, CO, He, Ne, Ar, and N₂, and the content of each component can be 0% or more and 0.1 % or less. The acceptable upper limit of the content of each component may be less than 0.05%, less than 0.03%, or even less than 0.01%. The acceptable upper limit of the total content of the components may be 0.1 % or less, less than 0.05%, less than 0.03%, or even less than 0.01%. The glass composition may be substantially free of any one component selected from the above group. Moreover, the glass composition may be substantially free of two or more components selected from the above group in any combination.

The glass composition can include a small amount of a noble metal element. Examples of the noble metal element include Pt, Rh, Au, and Os. The content of each noble metal element is 0% or more and 0.1% or less. The acceptable upper limit of the content of each component may be less than 0.1%, less than 0.05%, less than 0.03%, or even less than 0.01%. The acceptable upper limit of the total content of the components may be less than 0.1%, less than 0.05%, less than 0.03%, or even less than 0.01%. The glass composition may be substantially free of these components.

The glass composition may substantially consist of the above components in any combination, and the above contents may be combined in any combination. The term "substantially" in "substantially consist" is intended to mean that inclusion of impurities is allowed as long as the content of the impurities is less than 0.1 mass%, preferably less than 0.07 mass%, more preferably less than 0.05 mass%, particularly preferably less than 0.01 mass%, most preferably less than 0.005 mass%.

(Examples of preferred composition)

The glass composition according to a preferred embodiment includes, in mass%:

55 ≤ SiO₂ ≤ 65;

20 ≤ B₂O₃ ≤ 30;

and

5 ≤ Al₂O₃ ≤ 20,

wherein

0.1 ≤ (MgO + CaO) < 5,

0 ≤ (Li₂O + Na₂O + K₂O) ≤ 4,

and

0.75 ≤ MgO/(MgO + CaO) ≤ 1.00

are satisfied.

The glass composition according to another preferred embodiment includes, in mass%:

50 ≤ SiO₂ ≤ 65;

20 ≤ B₂O₃ ≤ 30;

5 ≤ Al₂O₃ ≤ 20;

and

0 ≤ F₂ ≤ 0.5,

wherein

0.1 ≤ (MgO + CaO) < 5,

0.1 ≤ (Li₂O + Na₂O + K₂O) ≤ 4,

and

0.50 < MgO/(MgO + CaO) ≤ 1.00

are satisfied.

The glass composition according to another preferred embodiment includes, in mass%:

50 ≤ SiO₂ ≤ 65;

20 ≤ B₂O₃ ≤ 30;

and

5 ≤ Al₂O₃ ≤ 15,

wherein

0.1 ≤ (MgO + CaO) < 5,

0 ≤ (Li₂O + Na₂O + K₂O) ≤ 4,

and

0.50 < MgO/(MgO + CaO) ≤ 1.00

are satisfied.

The glass composition according to another preferred embodiment includes, in mass%:

50 ≤ SiO₂ ≤ 65;

20 ≤ B₂O₃ ≤ 30;

5 ≤ Al₂O₃ ≤ 20;

and

0.1 ≤ TiO₂ ≤ 5,

wherein

0.1 ≤ (MgO + CaO) < 5,

0.1 ≤ (MgO + CaO + ZnO) ≤ 6,

0 ≤ (Li₂O + Na₂O + K₂O) ≤ 4,

and

0.50 < MgO/(MgO + CaO) ≤ 1.00

are satisfied.

The glass composition according to another preferred embodiment includes, in mass%, 0.1 ≤ Li₂O ≤ 4. The glass composition according to this embodiment may be the glass composition according to one of the above preferred embodiments.

The glass composition according to another preferred embodiment further includes, in mass%, 0 ≤ P₂O₅ ≤ 5. The glass composition according to this embodiment may be the glass composition according to one of the above preferred embodiments.

The glass composition according to another preferred embodiment is substantially free of F₂. The glass composition according to this embodiment may be the glass composition according to one of the above preferred embodiments.

The glass composition according to another preferred embodiment further includes, in mass%, 0 ≤ ZnO ≤ 5. The glass composition according to this embodiment may be the glass composition according to one of the above preferred embodiments.

The glass composition according to another preferred embodiment further includes, in mass%, 0 ≤ BaO ≤ 5. The glass composition according to this embodiment may be the glass composition according to one of the above preferred embodiments.

The glass composition according to another preferred embodiment further includes, in mass%, 0 ≤ SrO ≤ 5. The glass composition according to this embodiment may be the glass composition according to one of the above preferred embodiments.

The glass composition according to another preferred embodiment further includes, in mass%, 0 ≤ ZrO₂ ≤ 5. The glass composition according to this embodiment may be the glass composition according to one of the above preferred embodiments.

### [Properties of glass composition]

Properties that the glass composition of the present invention can have will be described. A glass filler including the glass composition of the present invention can have the following properties.

### (Permittivity)

In the case where the glass filler is incorporated in a resin composition, a loss of permittivity properties of the resin composition can be reduced when the glass composition forming the glass filler has a permittivity of 4.6 or less at a frequency of 1 GHz. In a preferred embodiment, the glass composition may have a permittivity of 4.6 or less, 4.5 or less, 4.4 or less, or even 4.3 or less at a frequency of 1 GHz. The lower limit of the permittivity at a frequency of 1 GHz may be 3.5 or more, 3.8 or more, 3.9 or more, or even 4.0 or more. A permittivity of 3.5 or more at a frequency of 1 GHz makes it relatively easy to adjust glass composition.

### (Melting properties)

A temperature at which the viscosity of a molten glass is 1000 dPa•sec (1000 poise) is called a working temperature, and is a temperature most suitable for shaping a glass. In the case where a glass flake or a glass fiber is manufactured as the glass filler, a variation of the thickness of the glass flake or a variation of the diameter of the glass fiber can be reduced when the glass has a working temperature of 1100°C or higher. When the working temperature is 1450°C or lower, the fuel cost required for glass melting can be reduced, and a glass manufacturing apparatus is less likely to be thermally eroded and accordingly a life span of the apparatus is extended. In a preferred embodiment, the lower limit of the working temperature of the glass composition may be 1100°C or higher, 1150°C or higher, 1200°C or higher, 1250°C or higher, 1300°C or higher, or even 1320°C or higher. The upper limit of the working temperature may be 1450°C or lower, 1420°C or lower, 1410°C or lower, 1400°C or lower, 1390°C or lower, or even 1380°C or lower.

The temperature difference ΔT is obtained by subtracting the devitrification temperature from the working temperature. A greater temperature difference ΔT makes devitrification less likely to occur at shaping of the glass, and, consequently, a homogeneous glass filler can be manufactured in a high yield rate. In other words, the greater the temperature difference ΔT is, the better ease of shaping (mass production efficiency) the glass filler has. In a preferred embodiment, the temperature difference ΔT of the glass composition may be 0°C or higher, 17°C or higher, 20°C or higher, 30°C or higher, 40°C or higher, 50°C or higher, 60°C or higher, 70°C or higher, 75°C or higher, 80°C or higher, 90°C or higher, 100°C or higher, 125°C or higher, 150°C or higher, 170°C or higher, 190°C or higher, or even 200°C or higher. A temperature difference ΔT of 500°C or lower makes it relatively easy to adjust glass composition. The temperature difference ΔT may be 500°C or lower, 400°C or lower, 300°C or lower, 250°C or lower, or even 200°C or lower.

### (Water resistance)

An amount of alkali dissolution can be employed as a measure of water resistance. The smaller the amount of alkali dissolution is, the higher water resistance the glass has. In the case where the glass filler is incorporated in a resin composition, when the amount of alkali dissolution of the glass composition is 0.40 mg or less, the strength of the resin composition is less decreased by water. In a preferred embodiment, the upper limit of the amount of alkali dissolution of the glass composition may be 0.40 mg or less, 0.37 mg or less, 0.35 mg or less, 0.34 mg or less, or even 0.33 mg or less. The lower limit of the amount of alkali dissolution is commonly about 0.001 mg, and may be 0.01 mg or more, or even 0.03 mg or more.

### [Glass filler]

The glass filler of the present invention includes the glass composition of the present invention. Examples of the form of the glass filler include at least one selected from the group consisting of a glass flake, a chopped strand, a milled fiber, a glass powder, a glass bead, a flat fiber, and a fine flake. However, the form of the glass filler is not limited to the above examples. It should be noted that these forms are not strictly distinguished from each other. Two or more glass fillers having different forms may be combined, and, for example, the mixture of the two or more glass fillers may be used as the filler. Each of the forms will be described below.

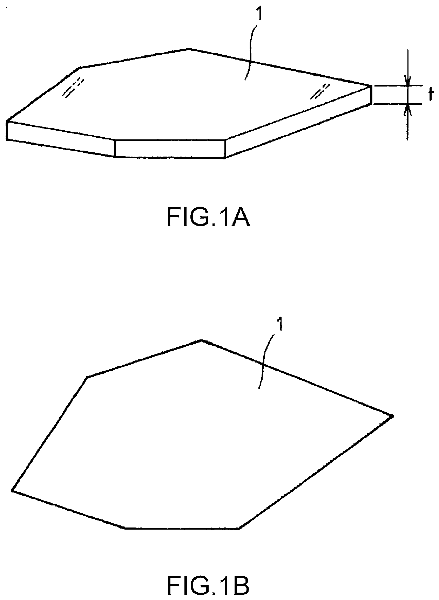

The glass flake is typically a flaky particle having an average thickness t of 0.1 µm or more and 15 µm or less, an average particle diameter a of 0.2 µm or more and 15000 µm or less, an aspect ratio (average particle diameter a/average thickness t) of 2 or more and 1000 or less (refer to FIGS. 1A and 1B; FIGS. 1A and 1B show an example of a glass flake 1). The average thickness t of the glass flakes can be evaluated by taking out at least 100 glass flakes, measuring a thickness of each glass flake by a means, such as a scanning electron microscope (SEM), for observation under magnification, and calculating the average of the measured thicknesses. The average particle diameter a of the glass flakes can be determined by a particle diameter (D50) at a cumulative volume percentage of 50% in a particle size distribution measured by a laser diffraction scattering method.

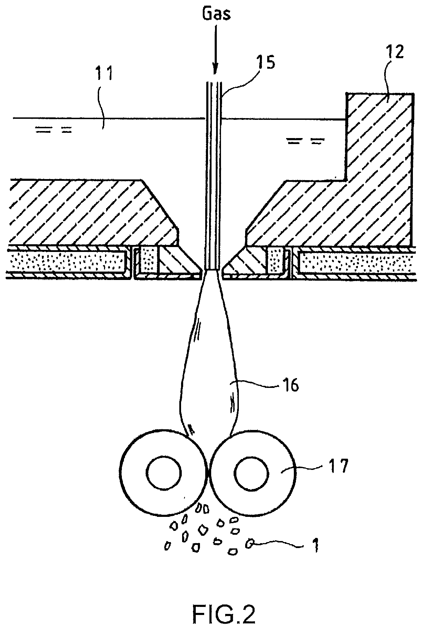

The glass flake can be obtained by a known blow process, cup process, or the like. FIG. 2 shows a manufacturing apparatus using the blow process. In this apparatus, a raw glass 11 having predetermined composition and molten in a refractory furnace 12 is inflated into a balloon by a gas delivered into a blow nozzle 15, and thus a hollow glass film 16 is formed. This hollow glass film 16 is crushed by a pair of pressing rolls 17 to give the glass flakes 1.

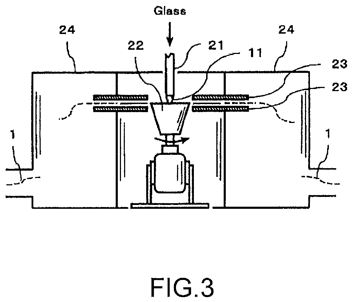

FIG. 3 shows a manufacturing apparatus using the cup process. In this apparatus, a molten raw glass 11 is poured into a rotary cup 22 through a nozzle 21, flows out from the upper edge of the rotary cup 22 in a radial manner by a centrifugal force generated by rotation of the rotary cup 22. The raw glass 11 having flown out of the rotary cup 22 is drawn by an air stream and introduced into an annular cyclone collector 24 through upper and lower annular plates 23 and 23. The glass cools and solidifies into a thin film while passing through the annular plates 23 and 23, and the thin film is crushed into fines pieces to give the glass flakes 1.

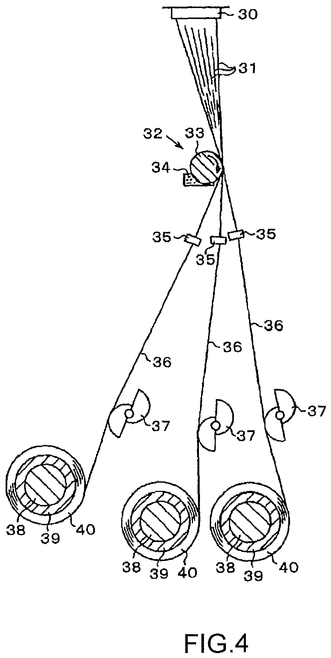

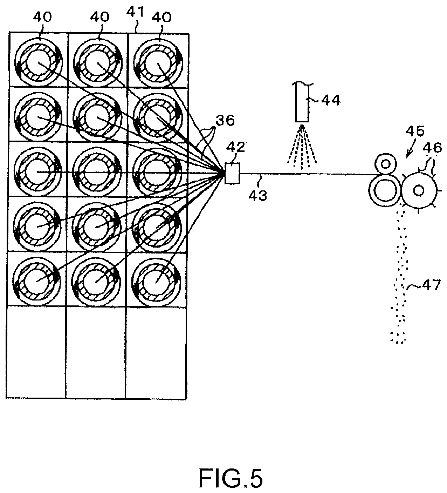

The chopped strand has a shape obtained by cutting the glass fiber into short pieces. The chopped strand has a fiber diameter of, for example, 1 to 50 µm and has an aspect ratio of, for example, 2 to 1000. The shape of a cross-section of the chopped strand may or may not be circular, and may be, for example, flattened. The fiber diameter of the chopped strand is defined as the diameter of a circle having the same area as that of a cross-section of the strand. The aspect ratio of the chopped strand can be determined by dividing the fiber length by the fiber diameter. The chopped strand can be manufactured, for example, using the apparatuses shown in FIGS. 4 and 5.

As shown in FIG. 4, a raw glass having predetermined composition and molten in a refractory furnace is drawn through a bushing 30 having a large number of (for example, 2400) nozzles in the bottom, and drawn out as a large number of glass filaments 31. The glass filaments 31 are sprayed with cooling water, and then a binder (sizing agent) 34 is applied to the glass filaments 31 by an application roller 33 of a binder applicator 32. The large number of glass filaments 31 on which the binder 34 is applied are bundled, through reinforcing pads 35, into three strands 36 each composed of, for example, about 800 glass filaments 31. While being traversed by a traverse finger 37, each of the strands 36 is wound on a cylindrical tube 39 mounted on a collet 38. The cylindrical tube 39 on which the strand 36 is wound is detached from the collet 38, and thus a cake (wound strand body) 40 is obtained.

Next, as shown in FIG. 5, the cakes 40 are placed in a creel 41, and the strands 36 are drawn out from the cakes 40 and bundled into a strand bundle 43 through a bundle guide 42. The strand bundle 43 is sprayed with water or a treatment liquid by a spraying apparatus 44. The strand bundle 43 is cut by a rotating blade 46 of a cutting apparatus 45, and thus chopped strands 47 are obtained.

The milled fiber has a shape obtained by cutting the glass fiber into powder. The milled fiber has a fiber diameter of, for example, 1 to 50 µm and have an aspect ratio of, for example, 2 to 500. The shape of a cross-section of the milled fiber may or may not be circular, and may be, for example, flattened. The fiber diameter of the milled fiber is defined as the diameter of a circle having the same area as that of a cross-section of the strand. The aspect ratio of the milled fiber can be obtained by dividing the fiber length by the fiber diameter. The milled fiber can be obtained by a known method.

The glass powder can be manufactured by crushing the glass. The glass powder has an average particle diameter of, for example, 1 to 500 µm. The particle diameter of the glass powder is defined as the diameter of a sphere having the same volume as a particle of the glass powder. The average particle diameter of the glass powder can be determined by D50 (a particle diameter at a cumulative volume percentage of 50%) evaluated by particle size distribution measurement of at least 0.1 g of the glass powder by a laser diffraction scattering method. The glass powder can be obtained by a known method.

The glass bead has a spherical shape or an approximately spherical shape. The glass bead has an average particle diameter of, for example, 1 to 500 µm. The particle diameter of the glass bead is defined as the diameter of a sphere having the same volume as a particle of the glass bead. The average particle diameter of the glass bead can be determined by D50 (a particle diameter at a cumulative volume percentage of 50%) evaluated by particle size distribution measurement of at least 0.1 g of the glass bead by a laser diffraction scattering method. The glass bead can be obtained by a known method.

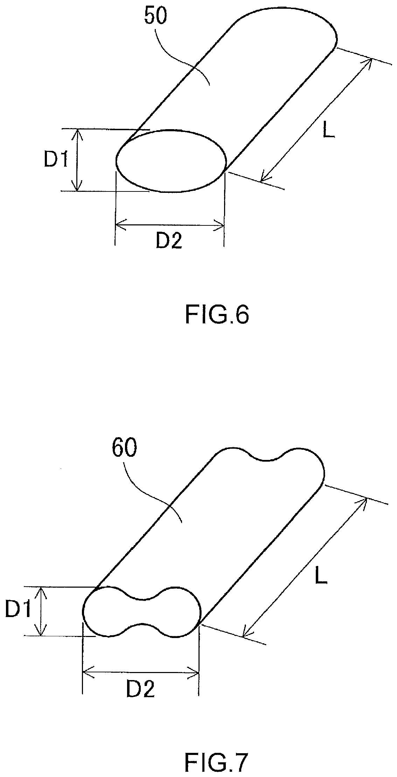

The flat fiber has a shape obtained by cutting a glass fiber having a cross-section with a flat shape such as an elliptical shape. As shown in FIG. 6, a major axis D2 is larger than a minor axis D1 in a cross-section of the flat fiber, and D2/D1 is, for example, 1.2 or more. The minor axis D1 is, for example, 0.5 to 25 µm. The major axis D2 is, for example, 0.6 to 300 µm. A length L of the flat fiber is, for example, 10 to 1000 µm. As shown in FIG. 7, a cross-section of a flat fiber 60 may be narrow in the middle. In other words, the cross-sectional shape of the flat fiber 60 may be a recessed shape in which a surface extending along the major axis D2 recedes in a central portion with respect to end portions. The cross-section has an approximate gourd shape or an approximate hourglass shape in which both sides of a central portion defined along the major axis D2 direction recede.

The fine flake is a thin glass flake. The fine flake may be formed of, for example, a glass flake having an average thickness of 0.1 to 2.0 µm, or may contain, for example, a glass flake having a thickness of 0.01 to 2.0 µm in an amount of 90 mass% or more. The fine flake having such a small average thickness and having a small variation in thickness exhibits a high reinforcing effect on a resin and also exhibits an excellent decreasing effect on a mold shrinkage factor of a resin. The fine flake can be obtained by the above-described method.

The glass filler can be manufactured by a method including: melting the above-described glass composition; and shaping the molten glass composition into a desired glass filler. The temperature for melting the glass composition is, for example, 1400°C or higher.

### [Granulation of glass filler]

At least a portion of the glass filler may be granulated. Granulation is a process in which glass fillers are subjected to a binder treatment such that the individual glass fillers are bonded to each other by a binder to be granulated. The granular glass filler hardly scatters and accordingly is excellent in workability, and is also excellent in dispersibility in a resin. The use of the granular glass filler improves the feeding efficiency, thereby allowing more reliable quantitative feeding. The binder used in the granulation will be described hereinafter.

The binder preferably contains a surfactant and a binding component. The surfactant may be anionic, cationic, amphoteric, or nonionic. A nonionic surfactant is preferably used in the case where the binding component contains an epoxy resin or a urethane resin. This is because agglomeration of the binder can be reduced for stabilization. Examples of an anionic surfactant include dioctyl sodium sulfosuccinate, fatty acid salt, alkyl sulfate, alkyl sulfonate, alkyl aryl sulfonate, alkyl naphthalene sulfonate, alkyl sulfosuccinate, alkyl diphenyl ether disulfonate, alkyl phosphate, polyoxyethylene alkyl sulfate, polyoxyethylene alkyl allyl sulfate, and sulfosuccinate. Examples of a cationic surfactant include higher amine halogen acid salt, alkyl pyridinium halide, and quaternary ammonium salt. Examples of an amphoteric surfactant include lauryl amino propionate and lauryl dimethyl betaine. Examples of a nonionic surfactant include: polyoxyethylene glycol alkyl ethers such as polyoxyethylene lauryl ether, polyoxyethylene higher alcohol ether, and polyoxyethylene octyl phenyl ether; polyethylene glycol fatty acid esters such as polyethylene glycol monostearate; sorbitan fatty acid esters such as sorbitan monolaurate and polyoxyethylene sorbitan monolaurate; glycol fatty acid esters such as glycol monostearate; and fatty acid monoglycerides. Two or more of these may be used in combination.

The binding component of the binder is not particularly limited, and an organic or inorganic component can be used. Examples of the organic binding component include methylcellulose, carboxymethyl cellulose, starch, carboxymethyl starch, hydroxyethyl cellulose, hydroxypropyl cellulose, polyvinyl alcohol, silane coupling agents, acrylic resins, epoxy resins, phenolic resins, vinyl acetate, and urethane resins. Examples of the inorganic binding component include liquid glass, colloidal silica, colloidal alumina, and amino silane. The binding component preferably contains at least one selected from a silane coupling agent, an epoxy resin, and an urethane resin. The silane coupling agent has two or more reactive groups in a molecule, one of which reacts with the surface of the glass filler, and another one of which reacts with the organic binding component and a thermoplastic resin. Accordingly, the affinity between the glass filler and the thermoplastic resin is improved. Epoxy resins and urethane resins have a good affinity for silane coupling agents and thermoplastic resins.

The concentration of the binder is preferably adjusted using water or an alcohol as a solvent so that the components can be uniformly present on the surface of the glass filler. The concentration of the binder is preferably 1 to 10 mass% in terms of total solid concentration. The binder can be manufactured, for example, by appropriately adding the binding component, the surfactant, etc. to the solvent at ordinary temperature and atmospheric pressure and stirring the resulting solution to homogeneity.

A ratio of the binder in the granulated glass filler, i.e., a deposit ratio of the binder, is, for example, 0.1 to 2 mass% in terms of a mass ratio of solids. A deposit ratio of 0.1 mass% or more is suitable for sufficiently reducing scattering of the glass filler. A deposit ratio of 2 mass% or less is suitable for reducing gas generation and thus discoloration of a resin composition at extrusion molding of the resin composition.

The method for granulating the glass filler is not particularly limited, and, for example, stirring granulation, fluidized bed granulation, injection granulation, or rotary granulation can be used. Specifically, a method is applicable in which the glass fillers on which an appropriate amount of the binder is deposited using a spray or the like are spread in a rotating drum or on a vibrating tray and the glass fillers are granulated while being heated to evaporate the solvent. The granular glass filler having a desired size can be manufactured by appropriately adjusting the rotational rate of the rotating drum or the vibration frequency of the vibration tray and the evaporation rate of the solvent.

The glass filler may have a surface treated with a surface treatment agent. This treatment may improve the reinforcing effect of the glass filler. Examples of the surface treatment agent include silicon coupling agents, such as γ-aminopropyltriethoxysilane, vinyltriethoxysilane, and γ-methacryloxypropyltrimethoxysilane, and titanium coupling agents. The amount of the surface treatment agent used is, for example, 0.05 to 0.20 mass% of the glass filler.

### [Resin composition]

A resin composition according to the present invention includes a thermoplastic resin as well as the glass filler according to the present invention. The thermoplastic resin is not limited to a particular one, and is, for example, polyvinyl chloride, polypropylene, polyethylene, polystyrene, polyester, polyamide, polycarbonate, polybutylene, polybutylene terephthalate, or a copolymer of these. The use of polybutylene terephthalate enhances a reducing effect on warpage of a molded article made by mixing with the glass filler and an improvement effect on dimensional stability thereof.

The content of the glass filler such as the glass flake in the resin composition is preferably 5 to 70 mass%. Setting the content to 5 mass% or more facilitates the glass filler to sufficiently exhibit its function as a reinforcement. Setting the content to 70 mass% or less facilitates the glass filler to be uniformly dispersed in the resin composition. To sufficiently reduce the mold shrinkage factor, the content of the glass filler is more preferably 30 mass% or more.

The resin composition may appropriately include a reinforcement other than the glass filler. For example, in applications requiring a high strength, a glass fiber may be included. In this case, the content of the glass fiber added may be nearly equal to that of the glass filler.

The glass flake, the flat fiber, and the fine flake have relatively large specific surface areas, and are suitable for ensuring the adhesive force with the thermoplastic resin. From this viewpoint, the flat fiber as shown in FIG. 7 is preferred because its recessed surface shape contributes to an increase in specific surface area.

The resin composition according to the present invention has a low permittivity, and is suitable for improving various properties. The improvement in various properties includes, for example: enhancement in strength, heat resistance, and dimensional stability; decrease in linear thermal expansion coefficient and reduction in its anisotropy; and reduction in anisotropy of the shrinkage factor at molding.

### EXAMPLES

Hereinafter, the present invention will be described in more detail by Examples. The present invention is not limited to the following Examples.

### (Examples 1 to 53 and Comparative Examples 1 to 6)

Common glass raw materials such as silica sand were weighed to give compositions shown in Tables 1 to 12 (the contents of the components are expressed in units of mass%). The glass raw materials of each composition were mixed to homogeneity to produce a glass raw material mixture batch. Next, the produced mixture batch was molten at 1500 to 1600°C using an electric furnace, and was maintained as it was for about 4 hours until the composition was homogenized. After that, a portion of the obtained molten glass (glass melt) was poured onto an iron plate, and was slowly cooled to room temperature in the electric furnace. A glass composition specimen (plate-shaped) to be used for evaluation was thus obtained in bulk.

Each glass specimen thus produced was evaluated for the working temperature, the devitrification temperature, the temperature difference ΔT, the amount of alkali dissolution, and the permittivity at a frequency of 1 GHz. The evaluation methods are as follows.

### [Working temperature]

The viscosity was measured by a platinum ball-drawing method, and a temperature at which the thus-measured viscosity was 1000 dPa•sec was defined as the working temperature. The platinum ball-drawing method is a method for measuring the viscosity of a molten glass by dipping a platinum ball in the molten glass, drawing the platinum ball upward in a uniform motion, determining a relation between the load (friction) during the drawing of the platinum ball and the gravity or buoyancy acting on the platinum ball, and applying the determined relationship to Stokes' law which states a relationship between the viscosity of a fluid in which a small particle settles down and the fall velocity of the small particle.

### [Devitrification temperature and temperature difference ΔT]

An amount of 25 g of the glass specimen crushed to a particle diameter of 1.0 to 2.8 mm was put in a platinum boat (a lidless rectangular platinum container), held for 2 hours in an electric furnace with a temperature gradient (800 to 1400°C), and then taken out of the electric furnace. The highest temperature in the electric furnace was defined as the devitrification temperature of the glass specimen, the highest temperature corresponding to a location where a crystal was observed in the glass. The particles having a diameter in the above range are obtained by sieving. Specifically, the glass specimen was crushed into particles, which were sieved to obtain particles that pass through a sieve (mesh sieve; the same can be said to sieves below) having an opening size of 2.8 mm and are left on a sieve having an opening size of 1.0 mm. The value obtained by subtracting the devitrification temperature from the working temperature was defined as the temperature difference ΔT.

### [Amount of alkali dissolution]

The amount of alkali dissolution was measured according to an alkali dissolution test defined in JIS R 3502: 1995 "Test method of glass apparatus for chemical analysis".

The measurement was specifically as follows. The glass specimen was crushed into particles, which were sieved to obtain particles that pass through a sieve having an opening size of 420 µm and are left on a sieve having an opening size of 250 µm. Next, particles having the same mass as that of the specific gravity of the glass specimen were weighed out from the sieved-out particles. The weighed-out particles were immersed in 50 mL of distilled water at 100°C for 1 hour, after which alkaline components in the water in which the particles had been immersed were titrated with 0.01 N sulfuric acid. The milliliters of the sulfuric acid consumed for the titration were multiplied by 0.31 to determine the milligrams of the alkaline components calculated as Na₂O. The determined milligrams were defined as the amount of alkali dissolution. The smaller the amount of alkali dissolution is, the higher water resistance the glass specimen has.

### [Permittivity]

The permittivity at a frequency of 1 GHz was measured using a permittivity measuring apparatus by a cavity resonator perturbation method. The measurement temperature was set to 25°C, and the dimensions of the sample for the measurement were set to a rectangular parallelepiped having a height of 100 mm and having a square bottom face of side 1.5 mm.

Tables 1 to 12 show evaluation results.

**[Table 1]**

| Component (mass%) or property | Example 1 | Example 2 | Example 3 | Example 4 | Example 5 |
|---|---|---|---|---|---|
| SiO₂ | 57.51 | 55.49 | 56.19 | 57.20 | 56.49 |
| B₂O₃ | 27.30 | 26.78 | 27.12 | 26.08 | 25.75 |
| Al₂O₃ | 10.72 | 13.65 | 12.24 | 12.26 | 13.67 |
| P₂O₅ | - | - | - | - | - |
| MgO | 3.43 | 3.06 | 3.41 | 3.42 | 3.07 |
| CaO | 0.24 | 0.74 | 0.24 | 0.24 | 0.74 |
| SrO | - | - | - | - | - |
| BaO | - | - | - | - | - |
| ZnO | - | - | - | - | - |
| MgO + CaO | 3.67 | 3.80 | 3.65 | 3.66 | 3.81 |
| MgO/(MgO + CaO) | 0.93 | 0.81 | 0.93 | 0.93 | 0.81 |
| MgO + CaO + ZnO | 3.67 | 3.80 | 3.65 | 3.66 | 3.81 |
| Li₂O | 0.70 | 0.18 | 0.70 | 0.70 | 0.18 |
| Na₂O | 0.10 | 0.10 | 0.10 | 0.10 | 0.10 |
| K₂O | - | - | - | - | - |
| Li₂O + Na₂O + K₂O | 0.80 | 0.28 | 0.80 | 0.80 | 0.28 |
| TiO₂ | - | - | - | - | - |
| ZrO₂ | - | - | - | - | - |
| Fe₂O₃ | - | - | - | - | - |
| F₂ | - | - | - | - | - |
| Devitrification temperature [°C] | 1107 | 1325 | 1207 | 1203 | 1324 |
| Working temperature [°C] | 1405 | 1380 | 1380 | 1396 | 1395 |
| ΔT [°C] | 298 | 55 | 173 | 193 | 71 |
| Amount of alkali dissolution [mg] | 0.23 | 0.15 | 0.16 | 0.13 | 0.11 |
| Permittivity | 4.3 | 4.3 | 4.4 | 4.4 | 4.3 |

**[Table 2]**

| Component (mass%) or property | Example 6 | Example 7 | Example 8 | Example 9 | Example 10 |
|---|---|---|---|---|---|
| SiO₂ | 61.31 | 56.56 | 56.64 | 59.90 | 57.01 |
| B₂O₃ | 21.86 | 23.64 | 27.96 | 26.44 | 26.03 |
| Al₂O₃ | 12.33 | 15.27 | 12.13 | 9.20 | 12.23 |
| P₂O₅ | - | - | - | - | 0.22 |
| MgO | 1.69 | 3.07 | 2.99 | 3.46 | 3.10 |
| CaO | 1.26 | 0.67 | - | 0.24 | 0.67 |
| SrO | - | - | - | - | - |
| BaO | - | - | - | - | - |
| ZnO | - | - | - | - | - |
| MgO + CaO | 2.95 | 3.74 | 2.99 | 3.70 | 3.77 |
| MgO/(MgO + CaO) | 0.57 | 0.82 | 1.00 | 0.94 | 0.82 |
| MgO + CaO + ZnO | 2.95 | 3.74 | 2.99 | 3.70 | 3.77 |
| Li₂O | 1.45 | 0.69 | 0.18 | 0.76 | 0.74 |
| Na₂O | 0.10 | 0.10 | 0.10 | - | - |
| K₂O | - | - | - | - | - |
| Li₂O + Na₂O + K₂O | 1.55 | 0.79 | 0.28 | 0.76 | 0.74 |
| TiO₂ | - | - | - | - | - |
| ZrO₂ | - | - | - | - | - |
| Fe₂O₃ | - | - | - | - | - |
| F₂ | - | - | - | - | - |
| Devitrification temperature [°C] | 1111 | 1321 | 1258 | 1033 | 1179 |
| Working temperature [°C] | 1409 | 1380 | 1413 | 1441 | 1396 |
| ΔT [°C] | 298 | 59 | 155 | 408 | 217 |
| Amount of alkali dissolution [mg] | 0.28 | 0.03 | 0.33 | 0.26 | 0.18 |
| Permittivity | 4.5 | 4.5 | 4.1 | 4.2 | 4.4 |

**[Table 3]**

| Component (mass%) or property | Example 11 | Example 12 | Example 13 | Example 14 | Example 15 |
|---|---|---|---|---|---|
| SiO₂ | 55.63 | 55.46 | 55.12 | 56.37 | 56.92 |
| B₂O₃ | 27.38 | 28.07 | 27.90 | 26.13 | 27.03 |
| Al₂O₃ | 12.90 | 12.18 | 12.89 | 12.28 | 12.20 |
| P₂O₅ | - | - | - | - | - |
| MgO | 3.07 | 3.76 | 3.07 | 4.89 | 2.67 |
| CaO | 0.74 | 0.24 | 0.74 | 0.04 | 0.38 |
| SrO | - | - | - | - | - |
| BaO | - | - | - | - | - |
| ZnO | - | - | - | - | - |
| MgO + CaO | 3.81 | 4.00 | 3.81 | 4.93 | 3.05 |
| MgO/(MgO + CaO) | 0.81 | 0.94 | 0.81 | 0.99 | 0.88 |
| MgO + CaO + ZnO | 3.81 | 4.00 | 3.81 | 4.93 | 3.05 |
| Li₂O | 0.18 | 0.19 | 0.18 | 0.19 | 0.70 |
| Na₂O | 0.10 | 0.10 | 0.10 | 0.10 | 0.10 |
| K₂O | - | - | - | - | - |
| Li₂O + Na₂O + K₂O | 0.28 | 0.29 | 0.28 | 0.29 | 0.80 |
| TiO₂ | - | - | - | - | - |
| ZrO₂ | - | - | - | - | - |
| Fe₂O₃ | - | - | - | - | - |
| F₂ | - | - | - | - | - |
| Devitrification temperature [°C] | 1287 | 1244 | 1282 | 1318 | 1179 |
| Working temperature [°C] | 1387 | 1382 | 1379 | 1380 | 1382 |
| ΔT [°C] | 100 | 138 | 97 | 62 | 203 |
| Amount of alkali dissolution [mg] | 0.24 | 0.24 | 0.26 | 0.08 | 0.27 |
| Permittivity | 4.3 | 4.2 | 4.3 | 4.3 | 4.3 |

**[Table 4]**

| Component (mass%) or property | Example 16 | Example 17 | Example 18 | Example 19 | Example 20 |
|---|---|---|---|---|---|
| SiO₂ | 55.29 | 55.62 | 55.12 | 56.03 | 54.12 |
| B₂O₃ | 27.75 | 27.16 | 27.67 | 26.39 | 27.40 |
| Al₂O₃ | 12.04 | 12.79 | 12.78 | 11.91 | 12.66 |
| P₂O₅ | - | - | - | - | - |
| MgO | 2.74 | 2.50 | 2.50 | 1.80 | 2.10 |
| CaO | 0.31 | 0.38 | 0.38 | 0.73 | 0.31 |
| SrO | 1.59 | 1.27 | 1.27 | 3.14 | 3.14 |
| BaO | - | - | - | - | - |
| ZnO | - | - | - | - | - |
| MgO + CaO | 3.05 | 2.88 | 2.88 | 2.53 | 2.41 |
| MgO/(MgO + CaO) | 0.90 | 0.87 | 0.87 | 0.71 | 0.87 |
| MgO + CaO + ZnO | 3.05 | 2.88 | 2.88 | 2.53 | 2.41 |
| Li₂O | 0.18 | 0.18 | 0.18 | - | 0.18 |
| Na₂O | 0.10 | 0.09 | 0.09 | - | 0.09 |
| K₂O | - | - | - | - | - |
| Li₂O + Na₂O + K₂O | 0.28 | 0.27 | 0.27 | - | 0.27 |
| TiO₂ | - | - | - | - | - |
| ZrO₂ | - | - | - | - | - |
| Fe₂O₃ | - | - | - | - | - |
| F₂ | - | - | - | - | - |
| Devitrification temperature [°C] | 1250 | 1329 | 1332 | 1264 | 1249 |
| Working temperature [°C] | 1392 | 1397 | 1390 | 1418 | 1379 |
| ΔT [°C] | 142 | 68 | 58 | 154 | 130 |
| Amount of alkali dissolution [mg] | 0.32 | 0.24 | 0.29 | 0.18 | 0.28 |
| Permittivity | 4.3 | 4.3 | 4.3 | 4.3 | 4.4 |

**[Table 5]**

| Component (mass%) or property | Example 21 | Example 22 | Example 23 | Example 24 | Example 25 |
|---|---|---|---|---|---|
| SiO₂ | 57.23 | 56.20 | 56.43 | 56.88 | 56.03 |
| B₂O₃ | 27.17 | 25.62 | 25.72 | 27.00 | 27.05 |
| Al₂O₃ | 10.67 | 13.60 | 13.66 | 12.18 | 12.20 |
| P₂O₅ | - | - | - | - | - |
| MgO | 3.10 | 2.74 | 3.34 | 2.66 | 4.19 |
| CaO | 0.24 | 0.31 | 0.09 | 0.38 | 0.53 |
| SrO | - | - | - | - | - |
| BaO | - | - | - | - | - |
| ZnO | 0.64 | 1.25 | - | - | - |
| MgO + CaO | 3.34 | 3.05 | 3.43 | 3.04 | 4.72 |
| MgO/(MgO + CaO) | 0.93 | 0.90 | 0.97 | 0.88 | 0.89 |
| MgO + CaO + ZnO | 3.98 | 4.30 | 3.43 | 3.04 | 4.72 |
| Li₂O | 0.56 | 0.18 | - | 0.65 | - |
| Na₂O | 0.39 | 0.10 | 0.76 | 0.10 | - |
| K₂O | - | - | - | 0.15 | - |
| Li₂O + Na₂O + K₂O | 0.95 | 0.28 | 0.76 | 0.90 | - |
| TiO₂ | - | - | - | - | - |
| ZrO₂ | - | - | - | - | - |
| Fe₂O₃ | - | - | - | - | - |
| F₂ | - | - | - | - | - |
| Devitrification temperature [°C] | 1092 | 1311 | 1348 | 1184 | 1298 |
| Working temperature [°C] | 1403 | 1384 | 1395 | 1400 | 1387 |
| ΔT [°C] | 311 | 73 | 47 | 216 | 89 |
| Amount of alkali dissolution [mg] | 0.25 | 0.11 | 0.13 | 0.22 | 0.10 |
| Permittivity | 4.3 | 4.3 | 4.4 | 4.3 | 4.2 |

**[Table 6]**

| Component (mass%) or property | Example 26 | Example 27 | Example 28 | Example 29 | Example 30 |
|---|---|---|---|---|---|
| SiO₂ | 55.32 | 55.39 | 55.04 | 56.19 | 55.76 |
| B₂O₃ | 27.46 | 28.04 | 27.86 | 26.90 | 27.99 |
| Al₂O₃ | 12.94 | 12.16 | 12.87 | 12.93 | 12.14 |
| P₂O₅ | - | - | - | - | - |
| MgO | 4.12 | 3.81 | 3.12 | 3.39 | 3.08 |
| CaO | 0.16 | 0.60 | 1.11 | 0.31 | 0.75 |
| SrO | - | - | - | - | - |
| BaO | - | - | - | - | - |
| ZnO | - | - | - | - | - |
| MgO + CaO | 4.28 | 4.41 | 4.23 | 3.70 | 3.83 |
| MgO/(MgO + CaO) | 0.96 | 0.86 | 0.74 | 0.92 | 0.80 |
| MgO + CaO + ZnO | 4.28 | 4.41 | 4.23 | 3.70 | 3.83 |
| Li₂O | - | - | - | 0.18 | 0.18 |
| Na₂O | - | - | - | 0.10 | 0.10 |
| K₂O | - | - | - | - | - |
| Li₂O + Na₂O + K₂O | - | - | - | - | - |
| TiO₂ | - | - | - | - | - |
| ZrO₂ | - | - | - | - | - |
| Fe₂O₃ | - | - | - | - | - |
| F₂ | - | - | - | - | - |
| Devitrification temperature [°C] | 1339 | 1283 | 1290 | 1315 | 1264 |
| Working temperature [°C] | 1378 | 1383 | 1380 | 1394 | 1392 |
| ΔT [°C] | 39 | 100 | 90 | 79 | 128 |
| Amount of alkali dissolution [mg] | 0.10 | 0.16 | 0.17 | 0.16 | 0.31 |
| Permittivity | 4.2 | 4.2 | 4.2 | 4.3 | 4.2 |

**[Table 7]**

| Component (mass%) or property | Example 31 | Example 32 | Example 33 | Example 34 | Example 35 |
|---|---|---|---|---|---|
| SiO₂ | 55.90 | 57.08 | 55.49 | 55.23 | 55.54 |
| B₂O₃ | 28.06 | 27.64 | 27.85 | 27.97 | 27.88 |
| Al₂O₃ | 12.18 | 11.43 | 12.87 | 12.92 | 12.88 |
| P₂O₅ | - | - | - | - | - |
| MgO | 3.02 | 2.67 | 2.70 | 3.36 | 2.68 |
| CaO | 0.23 | 0.38 | 0.81 | 0.10 | 0.60 |
| SrO | - | - | - | - | - |
| BaO | - | - | - | - | - |
| ZnO | - | - | - | - | - |
| MgO + CaO | 3.25 | 3.05 | 3.51 | 3.46 | 3.28 |
| MgO/(MgO + CaO) | 0.93 | 0.88 | 0.77 | 0.97 | 0.82 |
| MgO + CaO + ZnO | 3.25 | 3.05 | 3.51 | 3.46 | 3.28 |
| Li₂O | 0.51 | 0.70 | 0.18 | 0.32 | 0.32 |
| Na₂O | 0.10 | 0.10 | 0.10 | 0.10 | 0.10 |
| K₂O | - | - | - | - | - |
| Li₂O + Na₂O + K₂O | - | - | - | - | - |
| TiO₂ | - | - | - | - | - |
| ZrO₂ | - | - | - | - | - |
| Fe₂O₃ | - | - | - | - | - |
| F₂ | - | - | - | - | - |
| Devitrification temperature [°C] | 1258 | 1208 | 1335 | 1309 | 1341 |
| Working temperature [°C] | 1389 | 1402 | 1390 | 1379 | 1389 |
| ΔT [°C] | 131 | 194 | 55 | 70 | 48 |
| Amount of alkali dissolution [mg] | 0.18 | 0.31 | 0.29 | 0.09 | 0.11 |
| Permittivity | 4.3 | 4.3 | 4.2 | 4.3 | 4.3 |

**[Table 8]**

| Component (mass%) or property | Example 36 | Example 37 | Example 38 | Example 39 | Example 40 |
|---|---|---|---|---|---|
| SiO₂ | 56.34 | 56.65 | 56.44 | 56.23 | 56.55 |
| B₂O₃ | 25.76 | 26.04 | 26.88 | 25.83 | 25.77 |
| Al₂O₃ | 13.68 | 12.24 | 12.13 | 12.14 | 13.69 |
| P₂O₅ | - | - | - | - | - |
| MgO | 3.38 | 3.41 | 3.08 | 2.76 | 3.38 |
| CaO | 0.31 | 0.24 | 0.31 | 0.23 | 0.31 |
| SrO | - | - | - | - | - |
| BaO | - | - | - | - | - |
| ZnO | - | - | 0.63 | 1.26 | - |
| MgO + CaO | 3.69 | 3.65 | 3.39 | 2.99 | 3.69 |
| MgO/(MgO + CaO) | 0.92 | 0.93 | 0.91 | 0.92 | 0.92 |
| MgO + CaO + ZnO | 3.69 | 3.65 | 4.02 | 4.25 | 3.69 |
| Li₂O | 0.18 | 0.70 | 0.18 | 0.55 | 0.18 |
| Na₂O | 0.10 | 0.10 | 0.10 | 0.38 | 0.10 |
| K₂O | - | - | - | - | - |
| Li₂O + Na₂O + K₂O | 0.28 | 0.80 | 0.28 | 0.93 | 0.28 |
| TiO₂ | 0.25 | 0.62 | 0.25 | 0.62 | - |
| ZrO₂ | - | - | - | - | - |
| Fe₂O₃ | - | - | - | - | 0.02 |
| F₂ | - | - | - | - | - |
| Devitrification temperature [°C] | 1340 | 1200 | 1251 | 1165 | 1342 |
| Working temperature [°C] | 1393 | 1390 | 1399 | 1382 | 1401 |
| ΔT [°C] | 53 | 190 | 148 | 217 | 59 |
| Amount of alkali dissolution [mg] | 0.09 | 0.11 | 0.21 | 0.15 | 0.10 |
| Permittivity | 4.3 | 4.4 | 4.3 | 4.4 | 4.3 |

**[Table 9]**

| Component (mass%) or property | Example 41 | Example 42 | Example 43 | Example 44 | Example 45 |
|---|---|---|---|---|---|
| SiO₂ | 56.13 | 57.74 | 56.54 | 55.63 | 56.92 |
| B₂O₃ | 27.10 | 26.97 | 27.93 | 27.92 | 27.02 |
| Al₂O₃ | 12.23 | 12.17 | 12.12 | 12.90 | 12.19 |
| P₂O₅ | - | - | - | - | - |
| MgO | 3.73 | 2.13 | 2.32 | 2.64 | 3.02 |
| CaO | 0.10 | 0.08 | 0.67 | 0.30 | 0.24 |
| SrO | - | - | - | - | - |
| BaO | - | - | - | - | - |
| ZnO | - | - | - | - | - |
| MgO + CaO | 3.83 | 2.21 | 2.99 | 2.94 | 3.26 |
| MgO/(MgO + CaO) | 0.97 | 0.96 | 0.78 | 0.90 | 0.93 |
| MgO + CaO + ZnO | 3.83 | 2.21 | 2.99 | 2.94 | 3.26 |
| Li₂O | 0.51 | 0.69 | 0.32 | 0.51 | 0.51 |
| Na₂O | 0.10 | 0.10 | 0.10 | 0.10 | 0.10 |
| K₂O | - | - | - | - | - |
| Li₂O + Na₂O + K₂O | 0.61 | 0.79 | 0.42 | 0.61 | 0.61 |
| TiO₂ | - | - | - | - | - |
| ZrO₂ | - | - | - | - | - |
| Fe₂O₃ | 0.10 | - | - | - | - |
| F₂ | - | 0.12 | - | - | - |
| Devitrification temperature [°C] | 1203 | 1168 | 1341 | 1333 | 1255 |
| Working temperature [°C] | 1386 | 1412 | 1410 | 1386 | 1404 |
| ΔT [°C] | 183 | 244 | 69 | 53 | 149 |
| Amount of alkali dissolution [mg] | 0.12 | 0.26 | 0.18 | 0.15 | 0.13 |
| Permittivity | 4.3 | 4.2 | 4.2 | 4.3 | 4.3 |

**[Table 10]**

| Component (mass%) or property | Example 46 | Example 47 | Example 48 | Example 49 | Example 50 |
|---|---|---|---|---|---|
| SiO₂ | 55.68 | 55.62 | 55.16 | 55.54 | 54.90 |
| B₂O₃ | 27.42 | 26.85 | 28.17 | 27.26 | 26.95 |
| Al₂O₃ | 12.92 | 13.69 | 12.22 | 12.68 | 13.74 |
| P₂O₅ | - | - | - | - | - |
| MgO | 2.70 | 3.00 | 3.41 | 3.38 | 3.39 |
| CaO | 0.67 | 0.23 | 0.24 | 0.24 | 0.23 |
| SrO | - | - | - | - | - |
| BaO | - | - | - | - | - |
| ZnO | - | - | - | - | - |
| MgO + CaO | 3.37 | 3.23 | 3.65 | 3.62 | 3.62 |
| MgO/(MgO + CaO) | 0.80 | 0.93 | 0.93 | 0.93 | 0.94 |
| MgO + CaO + ZnO | 3.37 | 3.23 | 3.65 | 3.62 | 3.62 |
| Li₂O | 0.51 | 0.51 | 0.70 | 0.70 | 0.69 |
| Na₂O | 0.10 | 0.10 | 0.10 | 0.10 | 0.10 |
| K₂O | - | - | - | - | - |
| Li₂O + Na₂O + K₂O | 0.61 | 0.61 | 0.80 | 0.80 | 0.79 |
| TiO₂ | - | - | - | - | - |
| ZrO₂ | - | - | - | - | - |
| Fe₂O₃ | - | - | - | 0.10 | - |
| F₂ | - | - | - | - | - |
| Devitrification temperature [°C] | 1294 | 1339 | 1194 | 1202 | 1271 |
| Working temperature [°C] | 1383 | 1381 | 1365 | 1340 | 1361 |
| ΔT [°C] | 89 | 42 | 171 | 138 | 90 |
| Amount of alkali dissolution [mg] | 0.13 | 0.08 | 0.21 | 0.15 | 0.10 |
| Permittivity | 4.3 | 4.3 | 4.4 | 4.4 | 4.4 |

**[Table 11]**

| Component (mass%) or property | Example 51 | Example 52 | Example 53 |
|---|---|---|---|
| SiO₂ | 56.65 | 56.77 | 57.05 |
| B₂O₃ | 26.90 | 26.95 | 26.01 |
| Al₂O₃ | 12.14 | 12.16 | 12.22 |
| P₂O₅ | - | - | - |
| MgO | 2.59 | 3.33 | 3.34 |
| CaO | 0.64 | 0.31 | 0.24 |
| SrO | - | - | - |
| BaO | 0.47 | - | - |
| ZnO | - | - | - |
| MgO + CaO | 3.23 | 3.64 | 3.58 |
| MgO/(MgO + CaO) | 0.80 | 0.91 | 0.93 |
| MgO + CaO + ZnO | 3.23 | 3.64 | 3.58 |
| Li₂O | 0.51 | 0.19 | 0.56 |
| Na₂O | 0.10 | 0.10 | 0.39 |
| K₂O | - | - | - |
| Li₂O + Na₂O + K₂O | 0.61 | 0.29 | 0.95 |
| TiO₂ | - | - | - |
| ZrO₂ | - | 0.19 | 0.19 |
| Fe₂O₃ | - | - | - |
| F₂ | - | - | - |
| Devitrification temperature [°C] | 1236 | 1276 | 1204 |
| Working temperature [°C] | 1400 | 1407 | 1398 |
| ΔT [°C] | 164 | 131 | 194 |
| Amount of alkali dissolution [mg] | 0.15 | 0.19 | 0.13 |
| Permittivity | 4.3 | 4.2 | 4.4 |

**[Table 12]**

| Component (mass%) or property | Comparative Example 1 | Comparative Example 2 | Comparative Example 3 | Comparative Example 4 | Comparative Example 5 | Comparative Example 6 |
|---|---|---|---|---|---|---|
| SiO₂ | 54.83 | 74.20 | 49.25 | 61.74 | 56.12 | 56.42 |
| B₂O₃ | 5.95 | 22.00 | 35.52 | 26.81 | 28.18 | 25.72 |
| Al₂O₃ | 14.52 | 0.30 | 10.56 | 10.52 | 10.64 | 12.09 |
| P₂O₅ | - | - | - | - | - | - |
| MgO | 0.38 | - | 3.07 | - | 1.84 | 1.50 |
| CaO | 22.80 | 0.50 | 0.67 | - | 2.42 | 0.08 |
| SrO | - | - | - | - | - | - |
| BaO | - | - | - | - | - | - |
| ZnO | - | - | - | - | - | - |
| MgO + CaO | 23.18 | 0.50 | 3.74 | - | 4.26 | 1.58 |
| MgO/(MgO + CaO) | 0.02 | - | 0.82 | - | 0.43 | 0.95 |
| MgO + CaO + ZnO | 23.18 | 0.50 | 3.74 | - | 4.26 | 1.58 |
| Li₂O | - | 0.50 | 0.55 | 0.55 | 0.70 | 0.37 |
| Na₂O | 0.49 | 1.00 | 0.38 | 0.38 | 0.10 | 3.82 |
| K₂O | 0.30 | 1.50 | - | - | - | - |
| Li₂O + Na₂O + K₂O | 0.79 | 3.00 | 0.93 | 0.93 | 0.80 | 4.19 |
| TiO₂ | - | - | - | - | - | - |
| ZrO₂ | - | - | - | - | - | - |
| Fe₂O₃ | 0.25 | - | - | - | - | - |
| F2 | 0.48 | - | - | - | - | - |
| Devitrification temperature [°C] | 1090 | - | 1078 | - | 1018 | 1133 |
| Working temperature [°C] | 1205 | - | 1274 | - | 1372 | 1381 |
| ΔT [°C] | 115 | - | 196 | - | 354 | 248 |
| Amount of alkali dissolution [mg] | 0.12 | 0.45 | > 1.0 | > 1.0 | 0.47 | > 1.0 |
| Permittivity | > 6.0 | 4.1 | - | - | 4.4 | - |

For Examples 1 to 53, the working temperature is 1340 to 1441°C, the temperature difference ΔT (= working temperature - devitrification temperature) is 39 to 408°C, the amount of alkali dissolution is 0.03 to 0.33 mg, and the permittivity at a frequency of 1 GHz is 4.1 to 4.5.

On the other hand, Comparative Example 1 having glass composition of a conventional E-glass exhibits a high permittivity, namely, more than 6.0.

Comparative Example 2 having glass composition of a conventional D-glass exhibits a larger amount of alkali dissolution than those of Examples 1 to 53.

In Comparative Example 3, the contents of SiO₂ and B₂O₃ are out of the ranges defined in the present invention. Comparative Example 3 exhibits a large amount of alkali dissolution, namely, more than 1.0 mg.

Comparative Example 4 does not include MgO and CaO and exhibits a large amount of alkali dissolution, namely, more than 1.0 mg.

In Comparative Example 5, MgO/(MgO + CaO) is out of the range defined in the present invention. Comparative Example 5 exhibits a larger amount of alkali dissolution than those of Examples 1 to 53.

In Comparative Example 6, Li₂O + Na₂O + K₂O is out of the range defined in the present invention. Comparative Example 6 exhibits a large amount of alkali dissolution, namely, more than 1.0 mg.

### (Examples 54 to 106)

Glass flakes were produced using the glass compositions of Examples 1 to 53. Specifically, each glass composition was molten again in an electric furnace, and was subsequently cooled and shaped into a pellet. The obtained pellet was put in a melting furnace to produce a glass flake having an average thickness of 1 to 2 µm and an average particle diameter of 100 to 500 µm.

### (Examples 107 to 159)

Chopped strands that can be used as glass fillers were produced using the glass compositions of Examples 1 to 53. Specifically, each glass composition was molten again in an electric furnace, and was subsequently cooled and shaped into a pellet. The obtained pellet was put in manufacturing apparatuses as shown in FIGS. 4 and 5 to produce a chopped strand having an average fiber diameter of 10 to 20 µm and a length of 3 mm.

### (Examples 160 to 212)

Milled fibers were produced using the chopped strands produced in Examples 107 to 159. Specifically, each chopped strand having an average fiber diameter of 10 to 20 µm and a length of 3 mm was crushed using an alumina ball mill to produce a milled fiber having an average fiber diameter of 10 to 20 µm and an average length of 50 to 100 µm.

### (Examples 213 to 265)

Fine flakes were produced using the glass compositions produced in Examples 1 to 53. Specifically, each glass composition was molten again in an electric furnace, and was subsequently cooled and shaped into a pellet. The obtained pellet was put in a melting furnace to produce a fine flake having an average thickness of 0.5 to 1 µm and an average particle diameter of 100 to 300 µm.

### INDUSTRIAL APPLICABILITY

The glass composition of the present invention can be used, for example, for manufacturing a glass filler. The glass filler of the present invention can be used in the same applications as conventional glass fillers.

## Claims

1. A glass composition comprising, in mass%:
50 ≤ SiO₂ ≤ 65;
20 ≤ B₂O₃ ≤ 30;
and
5 ≤ Al₂O₃ ≤ 20,
and further comprising:
at least one selected from the group consisting of MgO and CaO; and
at least one selected from the group consisting of Li₂O, Na₂O, and K₂O, wherein
0.1 ≤ (MgO + CaO) < 5,
0 ≤ (Li₂O + Na₂O + K₂O) ≤ 4,
and
0.50 < MgO/(MgO + CaO) ≤ 1.00
are satisfied.
2. The glass composition according to claim 1, comprising, in mass%:
55 ≤ SiO₂ ≤ 65;
20 ≤ B₂O₃ ≤ 30;
and
5 ≤ Al₂O₃ ≤ 20,
wherein
0.1 ≤ (MgO + CaO) < 5,
0 ≤ (Li₂O + Na₂O + K₂O) ≤ 4,
and
0.75 ≤ MgO/(MgO + CaO) ≤ 1.00
are satisfied.
3. The glass composition according to claim 1, comprising, in mass%:
50 ≤ SiO₂ ≤ 65;
20 ≤ B₂O₃ ≤ 30;
5 ≤ Al₂O₃ ≤ 20; and
0 ≤ F₂ ≤ 0.5, wherein
0.1 ≤ (MgO + CaO) < 5,
0.1 ≤ (Li₂O + Na₂O + K₂O) ≤ 4,
and
0.50 < MgO/(MgO + CaO) ≤ 1.00
are satisfied.
4. The glass composition according to claim 1, comprising, in mass%:
50 ≤ SiO₂ ≤ 65;
20 ≤ B₂O₃ ≤ 30;
and
5 ≤ Al₂O₃ ≤ 15,
wherein
0.1 ≤ (MgO + CaO) < 5,
0 ≤ (Li₂O + Na₂O + K₂O) ≤ 4,
and
0.50 < MgO/(MgO + CaO) ≤ 1.00
are satisfied.
5. The glass composition according to claim 1, comprising, in mass%:
50 ≤ SiO₂ ≤ 65;
20 ≤ B₂O₃ ≤ 30;
5 ≤ Al₂O₃ ≤ 20;
and
0.1 ≤ TiO₂ ≤ 5,
wherein
0.1 ≤ (MgO + CaO) < 5,
0.1 ≤ (MgO + CaO + ZnO) ≤ 6,
0 ≤ (Li₂O + Na₂O + K₂O) ≤ 4,
and
0.50 < MgO/(MgO + CaO) ≤ 1.00
are satisfied.
6. The glass composition according to any one of claims 1 to 5, comprising, in mass%, 0.1 ≤ Li₂O ≤ 4.
7. The glass composition according to any one of claims 1 to 6, further comprising, in mass%, 0 ≤ P₂O₅ ≤ 5.
8. The glass composition according to any one of claims 1 to 7, being substantially free of F₂.
9. The glass composition according to any one of claims 1 to 8, further comprising, in mass%, 0 ≤ ZnO ≤ 5.
10. The glass composition according to any one of claims 1 to 9, further comprising, in mass%, 0 ≤ BaO ≤ 5
11. The glass composition according to any one of claims 1 to 10, further comprising, in mass%, 0 ≤ SrO ≤ 5.
12. The glass composition according to any one of claims 1 to 11, further comprising, in mass%, 0 ≤ ZrO₂ ≤ 5.
13. The glass composition according to any one of claims 1 to 12, having a permittivity of 4.6 or less at a frequency of 1 GHz.
14. The glass composition according to any one of claims 1 to 13, having a working temperature of 1450°C or lower, wherein
the working temperature is a temperature at which a viscosity of the glass composition is 1000 dPa•sec.
15. The glass composition according to any one of claims 1 to 14, having a temperature difference ΔT of 0°C or higher, the temperature difference ΔT being obtained by subtracting a devitrification temperature from a working temperature, wherein
the working temperature is a temperature at which a viscosity of the glass composition is 1000 dPa•sec.
16. The glass composition according to any one of claims 1 to 15, wherein an amount of alkali dissolution measured for the glass composition according to an alkali dissolution test defined in JIS R 3502: 1995 is 0.001 to 0.40 mg.
17. A glass filler comprising the glass composition according to any one of claims 1 to 16.
18. The glass filler according to claim 17, being at least one selected from the group consisting of a glass flake, a chopped strand, a milled fiber, a glass powder, a glass bead, a flat fiber, and a fine flake.
19. The glass filler according to claim 18, being the glass flake.
20. The glass filler according to claim 18, being the chopped strand.
21. The glass filler according to claim 18, being the milled fiber.
22. The glass filler according to claim 18, being the fine flake.
23. A resin composition comprising the glass filler according to any one of claims 17 to 22 and a thermoplastic resin.
24. A glass filler manufacturing method comprising:
melting the glass composition according to any one of claims 1 to 16; and
shaping the molten glass composition into a glass filler.
